# EUROPEAN PATENT SPECIFICATION

(11) **EP 1 304 474 B1**
(45) Date of publication and mention of the grant of the patent: **26.05.2004**
(21) Application number: 02023044.7
(22) Date of filing: 16.10.2002
(51) Int. Cl.: F02M 37/10, B67D 5/50, G01F 23/32, G01F 23/34, G01F 23/76, B62J 35/00

(54) **Fuel level detecting device for fuel tanks**
Kraftstoffniveaumesser für Treibstofftanks
Dispositif de détection de niveau de carburant pour un réservoir de carburant

(30) Priority: 22.10.2001 JP 2001323747
(43) Date of publication of application: 23.04.2003
(73) Proprietor: YAMAHA HATSUDOKI KABUSHIKI KAISHA, Iwata-shi Shizuoka-ken (JP)
(72) Inventor: Okamoto, Yasuo, Iwata-shi, Shizuoka-ken (JP)
(74) Representative: Grünecker, Kinkeldey, Stockmair & Schwanhäusser Anwaltssozietät

(56) References cited:
- EP-A- 0 761 959
- DE-A- 19 615 317
- US-A- 5 303 685
- US-A- 5 992 394
- US-B1- 6 176 133
- US-B1- 6 253 790
- US-B1- 6 276 201
- US-B1- 6 298 540

## Description

The present invention relates to a combination of a fuel level detecting device and a fuel pump for fuel tanks with a built-in fuel pump comprising a fuel level detecting unit for detecting an actual fuel level within said fuel tank.

Further, the invention relates to a motor vehicle, in particular scooter-type motorcycle, comprising a fuel tank with a built-in fuel pump and a fuel level detecting device.

In a conventional fuel level detecting device for detecting the remaining amount of fuel in a fuel tank, a fuel level detecting unit is generally accommodated to be placed in an appropriate position in the fuel tank. In the case of the fuel tank with a built-in fuel pump, the fuel level detecting unit is mounted to the built-in fuel pump so that an inside structure of the fuel tank can be simplified and its assemble ability can be enhanced.

An example of such a combination of a fuel detecting device and a fuel pump is disclosed in EP 0 761 959 A1.

In the meantime, it is necessary for the fuel pump to be mounted in the fuel tank such that its discharge opening is in an orientation according to that of the piping route of the supply hose. Thereby, a float of the fuel level detecting unit mounted to the fuel pump may not be positioned properly depending on the shape of the fuel tank. For example, the float does not move upward to the fuel level when the tank is filled up with fuel (the maximum allowed fuel level), therefore, there could be cases where the maximum allowed fuel level cannot be detected.

It is therefore an object of the present invention to provide a combination of a fuel level detecting device and a fuel pump for fuel tanks which can detect a maximum allowed fuel level, respectively, even in the case of variously shaped fuel tanks.

It is further the object to provide a motor vehicle, in particular scooter-type motorcycle comprising such a fuel level device.

This object is solved in an inventive manner by a mounting structure being formed at said fuel pump and having a number of mounting seats for an alternative attachment of said fuel level detecting unit.

Further, for a motor vehicle, in particular a scooter-type motorcycle, the object is solved in that a fuel level detecting device is provided according to one of the claims 1 to 17.

Therefore, since the fuel level detecting unit is capable of being selectably mounted to the fuel pump, a float of the fuel level detecting unit can oscillate at different positions in the fuel tank, the fuel level detecting unit can be mounted by selecting the position thereof to be fitted so that the float is positioned to reliably detect the fuel level based on the shape of the fuel tank or the like, thereby reliably detecting the maximum allowed fuel level even in the case of variously shaped fuel tanks.

Preferably, the fuel pump is placed in that fuel tank in a generally vertical direction, thereby said mounting seats are arranged at side faces of said fuel pump thereby enclosing an angle α between one another, said angle α enclosed between two adjacent mounting seats being preferably 90°.

Further, said fuel level detecting unit may comprise a base member detachably mountable to a selected one of said mounting seats of said mounting structure and a floatable means being connected to said base member, wherein said base member comprises a sensor generating an output signal according to a position of said floatable means. Said floatable means is preferably connected to said base member via an arm thereby being capable of performing an oscillating movement with respect to the base member.

Thereby, said floatable means is designed to oscillate at different positions in the fuel tank according to the selected mounting seat.

In particular, said floatable means is designed to oscillate about a mounting position of said arm at said base member at positions in the fuel tank being generally perpendicular to one another.

In a preferred embodiment, said base member is connectable by means of a push-fitting connection to a selected one of said mounting seats, in particular by engaging pieces formed at said base member engaging in engaging grooves formed in that mounting seats.

Accordingly, such a fuel level detecting device for a fuel tank comprises a fuel level detecting unit disposed to be adapted to support a float capable of oscillating in a fuel tank with a built-in fuel pump and detecting the fuel level through the oscillations of the float; wherein the fuel level detecting unit is capable of being selectably mounted to the fuel pump such that the float oscillates at the different positions in the fuel tank.

Preferably, the fuel level detecting unit has a structure in which an arm with a float supported at its tip is oscillatorily supported by a base member and a sensor that generates output depending an the oscillation angle of the arm is disposed within said base member, and a plurality of mounting seats to which the base member of the fuel level detecting unit is selectably and detachably mounted are formed on the side face of a pump body of the fuel pump that is inserted and placed into the fuel tank generally in the vertical direction.

In particular, first and second mounting seats are formed adjacent and generally perpendicular to each other on the side face of the pump body, and selectably mounting the base member of the fuel level detecting unit to the first and the second mounting seats enables the float to oscillate at the positions generally perpendicular to each other in the fuel tank.

As a result of that, the convenient position of the float for detecting the maximum allowed fuel level can be selected depending on the tank shape or the like.

Further preferred embodiments of the present invention are subject to the subclaims.

In the following, the present invention is explained in greater detail with respect to several embodiments thereof in conjunction with the accompanying drawings, wherein:
- Fig. 1: is a left side view of a scooter-type motorcycle to which one embodiment of the present invention is applied;
- Fig. 2: is a plan view, showing the above embodiment to which a fuel tank and a fuel injection valve are mounted;
- Fig. 3: is a left side view, showing the above embodiment to which the fuel tank and the fuel injection valve are mounted;
- Fig. 4: is a back view, showing the above embodiment to which the fuel tank is mounted (a sectional view along an IV-IV line of Fig. 3);
- Fig. 5: is a perspective view of a fuel level detecting device of the above embodiment;
- Fig. 6: is a sectional view of a principal part of the above embodiment to which the fuel level detecting device is mounted (a sectional view along a VI-VI line of Fig. 5); and
- Fig. 7: is a sectional view of a principal part of the above embodiment to which the fuel injection valve is mounted (a sectional view along a VII-VII line of Fig. 2).

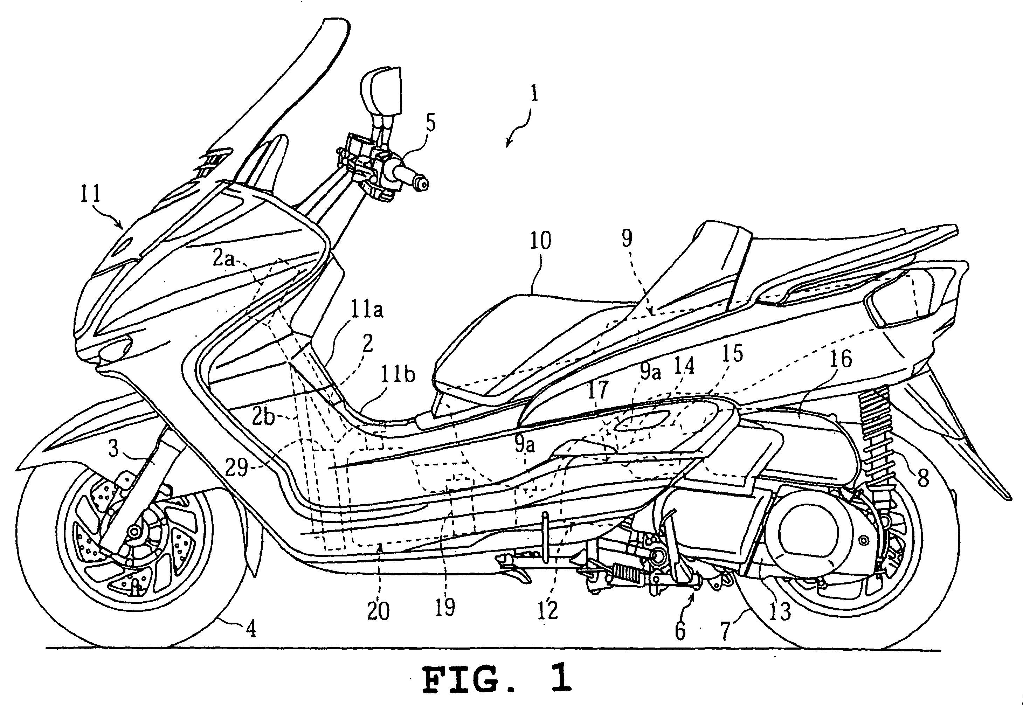

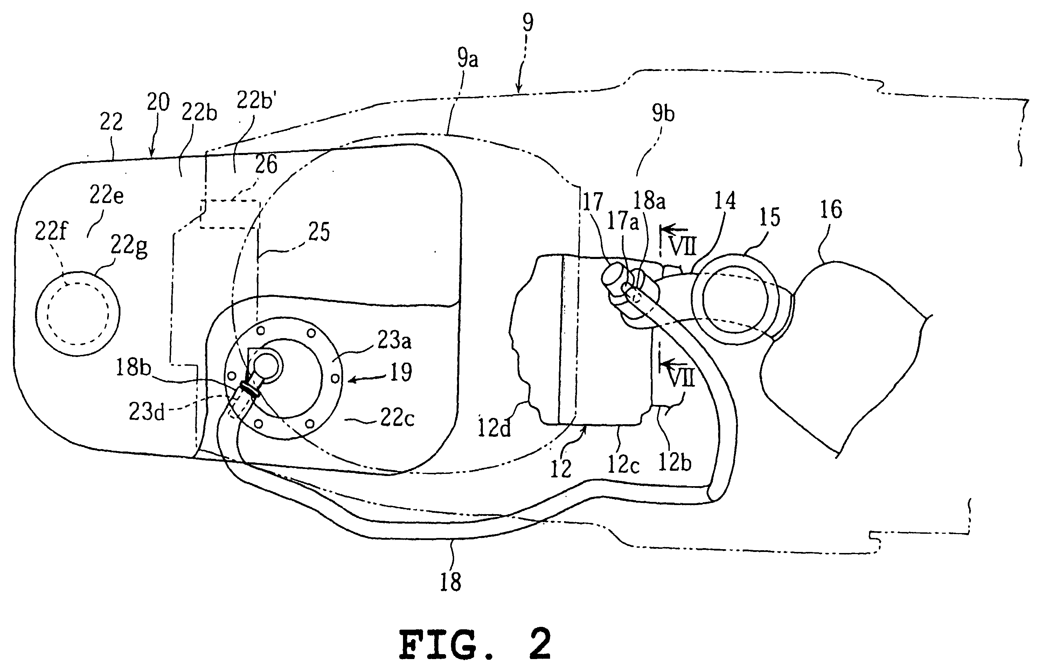

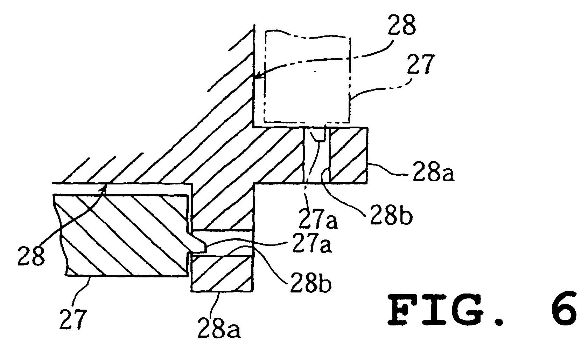

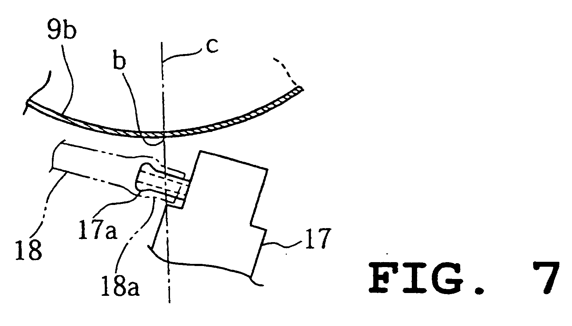

Figs. 1 through 7 are views explanatory of one embodiment of the present invention.

In the embodiment, the terms front, rear, left and right are denoted as front, rear, left and right when viewed from the riding position.

In the drawing, Fig. 1 shows a scooter-type motorcycle with the following schematic constitution. In other words, a front fork 3 is supported steerably from side to side by a head pipe 2a at the front end of a body frame 2, which allows a front wheel 4 to be pivotably supported at the lower end of said front fork 3 and allows handle bars 5 to be fixed to the upper end thereof. A unitary swing-type engine unit 6 is also oscillatory and pivotably supported at approximately the midsection of the body frame 2 to allow a rear wheel 7 to be pivotably supported at the rear end of said engine unit 6 and to allow a rear wheel suspension system 8 to be linked between said rear end and the rear end of the body frame 2. In addition, a storage box 9 is disposed above the engine unit, enabling said storage box 9 to be opened and closed through a seat 10. Furthermore, almost all of the parts other than the front wheel 4 and the rear wheel 7 are generally enclosed by a body cover 11. They include the forward section of the handle bars 5, peripheries of the entire body frame 2, the forward section of the engine unit 6 and the storage box 9, or the like.

The storage box 9 has a length extending from approximately the midsection between the front and the rear wheels 4, 7 on their upper portion to the rear extent of the rear wheel 7 on its upper portion in which a large and generally arc-shaped part protruding downward is formed on its forward section 9a so as to be deep enough to store a helmet. Also, the forward section 9a, when viewed from a cross-section of the perpendicular plane to the center line of the vehicle, has a generally arc-shaped part protruding downward at the bottom of said forward section 9a. The bottom thereof is higher toward the outer side of the vehicle width direction from its lowest end a. The depth of the midsection 9b of the storage box 9 is relatively smaller than that of the forward section 9a. The bottom of the midsection 9b, when viewed from the cross-section, has a substantially larger radius of curvature than that of the forward section 9a while still being adapted to be an arc-shape, and the bottom thereof is higher toward the outer side of the vehicle width direction from its lowest end b.

The engine unit 6 is constituted to be integrally connected to a water-cooled four-stroke single cylinder engine body 12 and a transmission case 13 in which a V-belt stepless shifting transmission mechanism is accommodated. The rear wheel 7 is pivotably supported at the rear end of said transmission case 13 to which the lower end of the rear wheel suspension system 8 is coupled. The engine body 12 is also connected to a cylinder body 12b, a cylinder head 12c and a head cover 12d through a front wall of a crankcase 12a by combining them so that they wholly extend forward generally in a horizontal direction.

The engine body 12 is positioned below the midsection 9b of the storage box 9: And an external connection opening 12e of an intake port connected to an internal combustion chamber is positioned on the top face of the cylinder head 12c. An intake manifold 14 connected to the external connection opening 12e extends rearward below the midsection 9b of the storage box 9 to connect to a throttle body 15 at its rear end. Said throttle body 15 is connected to an air cleaner 16. The air cleaner 16 is placed above the transmission case 13 and fixed to said transmission case 13.

A throttle pulley 15b is fixedly mounted to the left end of a valve axis 15a of a butterfly-type throttle valve disposed within the throttle body 15. Two throttle cables 15c, 15c looped around said throttle pulley 15b are connected to throttle grips of the handle bars 5.

A fuel injection valve 17 is mounted in the vicinity of the connection point of the intake manifold 14 to the cylinder head 12c. The fuel injection valve 17 is positioned on one side of the vehicle width direction, more particularly, in a part deviating rightward from the lowest end b at the bottom of the midsection 9b of the storage box 9 relative to the intake manifold 14 while being inclined rightward as described above and forward relative to the vertical line c. And a fuel supply opening 17a of the fuel injection valve 17 is directed rearward and leftward of the vehicle and a downstream end 18a of a fuel supply hose 18 is fixedly connected to said fuel supply opening 17a.

The fuel supply hose 18 extends leftward of the vehicle from the fuel injection valve 17 to the space between the intake manifold 14 and the bottom of the mid section 9b, and then extends forward running along the left side of the engine body 12 to allow the upstream end 18b thereof to be connected to a discharge opening 23d of a fuel pump 19 discussed later. The fuel pump 19 is inserted and placed into the fuel tank 20. Said fuel tank 20 is positioned forward of the engine body 12 and placed so as to allow its rear-half section to be positioned below the forward section 9a of the storage box 9.

The fuel tank 20 is adapted to be a generally rectangular shape in the plane view and consisting of two halves jointed together, a lower-half section 21 and an upper-half section 22 made of sheet metal. Flanges 21 a, 22a, respectively bent and formed along the perimeter of the upper opening of the lower-half section 21 and that of the lower opening of the upper-half section 22, are welded to be jointed.

While a bottom 21 b of the lower-half section 21 stands generally flat, a top surface 22b of the upper-half section 22 is wholly formed with greater height toward its forward section, thereby preventing it from being interfered with by the forward section 9a of the storage box 9 and maintaining capacity of the fuel tank. A filler pipe 22f is projected from a front protrusion 22e at the highest position of the top surface 22b and a filler cap 22g detachably fitted to said filler pipe 22f is faced outward when an lid 11 b formed openably and closably in a footboard 11a area of the body cover 11 is opened.

On the left side portion of the rear-half section of the top surface 22b is formed a step 22c made lower down in order to mount the fuel pump 19 thereon. The fuel pump 19 is fixed to said fuel tank 20 by which a pump body 23 is inserted downward into the fuel tank 20 in the generally vertical direction from mounting holes 22d formed on the step 22c, and a flange 23a formed at the upper end of said pump body 23 is fastened through the mounting holes 22d along its outer edge with bolts. The pump body 23 incorporates a pump mechanism in which a filter 23c is mounted to an inlet opening 23b at its lower end.

The discharge opening 23d formed at the upper end, which protrudes outward of the pump body 23 is slightly directed aslant forwardly to the left side and the downstream end 18b of the fuel supply hose 18 is connected to said discharge opening 23d so as to prevent it from being interfered with by the downward protrusion of the forward section 9a of the storage box 9 by allowing the downstream end 18b to go forward of and around said protrusion.

In here, the fuel pump 19 is placed so as to deviate leftward of the vehicle. More particularly, said fuel pump 19 deviates leftward from the lowest end a at the bottom of the forward section 9a of the storage box 9. The discharge opening 23d of the fuel pump 19 is also directed outward in the deviating direction.

In addition, reference numeral 29 is denoted as a radiator which is placed so as to be in a position forward of the fuel tank 20 and between a left and a right down tubes 2b, 2b when viewed from the front of the vehicle, and so as to be in an upright position in the generally vertical direction.

A fuel level detecting unit 24 is mounted to the pump body 23 positioned in the fuel pump 19 of the fuel tank 20. The fuel level detecting unit 24 is made of metal or resin, and has a structure in which a float 26 consisting of sealed semicylindrical body is fixed to a tip of an arm 25 fabricated from a rod, and a base end of said arm 25 is oscillatory supported by a box-shaped base member 27. A sensor (potentiometer) that generates a variable voltage signal depending on the oscillation angle of the arm 25 is accommodated within the base member 27.

The base member 27 is capable of being selectably mounted to either the first or the second resin mounting seats 28, 28' of the pair, which are formed on the outer face of the pump body 23. The mounting seats 28, 28' are placed adjacent and perpendicular to each other. Each of said mounting seats 28, 28' has a pair of mounting rails 28a, 28a formed according to the width dimensions of the base member 27. When the base member 27 is push-fitted between each of said mounting rails 28a, 28a, an engaging piece 27a projected from the left and the right edge faces of said base member 27 is engaged in each of engaging grooves 28b formed into the mounting rails 28a, thereby mounting the fuel level detecting unit 24 as well as the base member 27 to the fuel pump 19. In addition, when removing the fuel level detecting unit 24, inserting a flat-blade driver or the hike into the space between the base member 27 and the mounting seats 28, 28' allows the engaging piece 27a and the engaging grooves 28b to be released from each other.

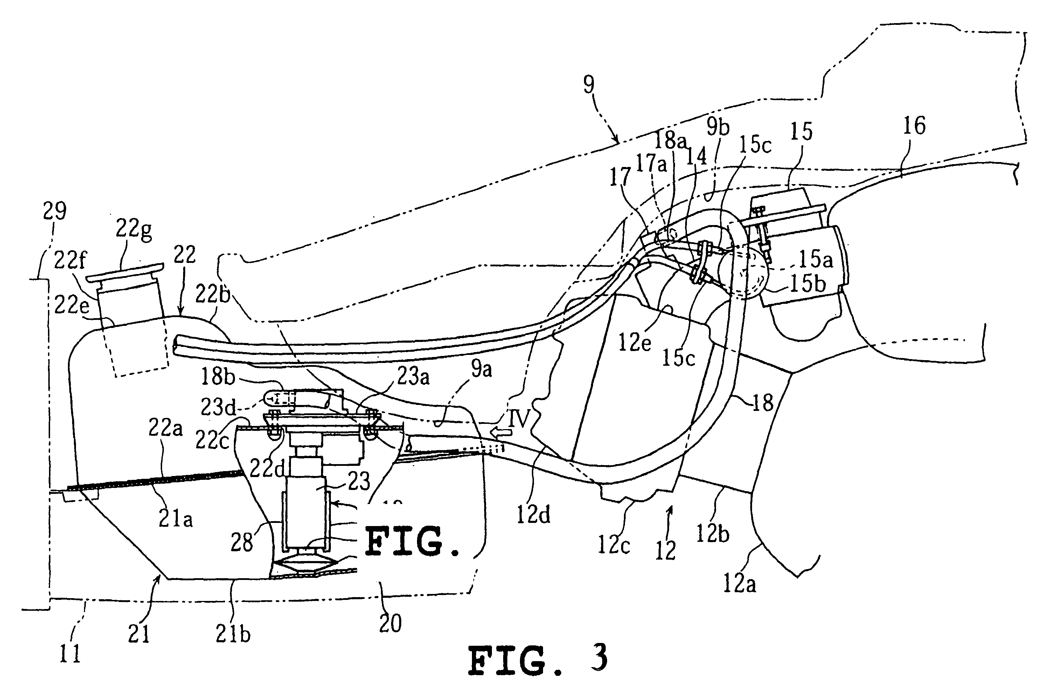

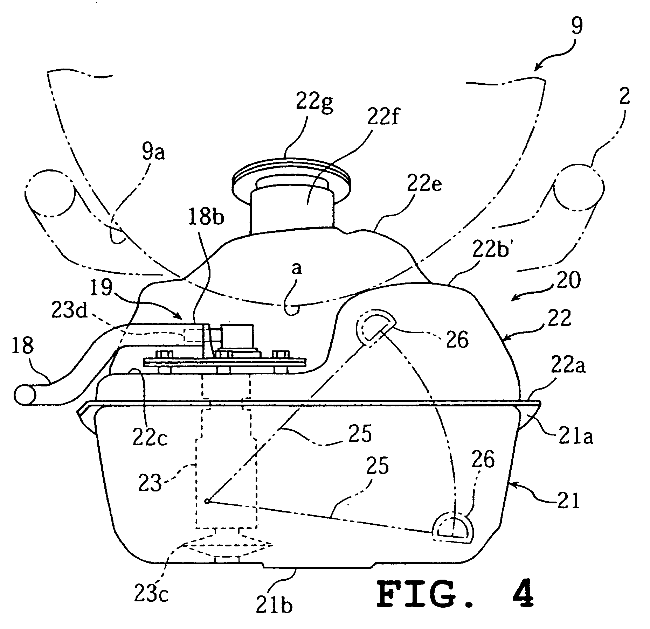

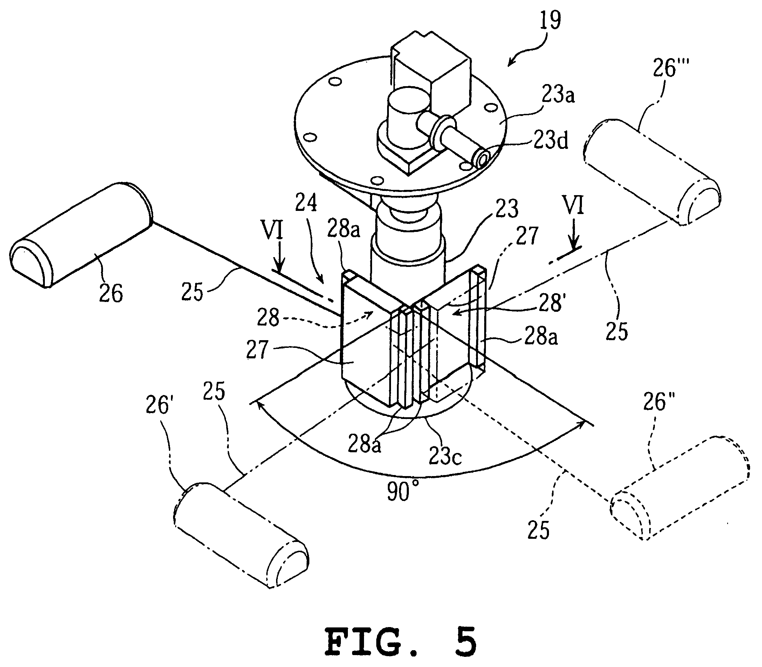

Here, as shown by solid lines in Fig. 5, in this embodiment, the base member 27 is mounted to the first mounting seat 28 on the left side in Fig. 5, therefore, the float 26 is positioned protruding leftward in Fig. 5. Viewing the float 26 as mounted to the inside of the fuel tank 20, as shown by phantom lines in Fig. 4 (the view from the arrow VI direction in Fig. 3) the float 26 can be positioned in a relatively higher part 22b' adjacent to the step 22c of the fuel tank 20. As a result of this, a relatively wide range of the oscillation of the float 26 is ensured, generally enabling it to detect the maximum allowed fuel level.

In addition, in Fig. 5, when the base member 27 of the fuel level detecting unit 24 is mounted to the second mounting seat 28' on the right side, the float 26' would be rotated 90° relative to the position described above as shown by the phantom lines. Thus, the float can oscillate at the two different positions perpendicular to each other. The float 26" constituted so as to be positioned as shown by dotted lines therein may also be employed as the fuel level detecting unit 24 and when the fuel level detecting unit constituted in such a manner is mounted to the second mounting seat 28' on the right side, the float 26"' results in being positioned as shown by dashed lines therein.

Description will be next made of the operations and effects of the invention.

In the storage box 9 in the cross-sectional view, said storage box 9 has a generally arc-shaped part protruding downward, more particularly, the forward section 9a and the midsection 9b at its bottom, and the fuel injection valve 17 is disposed to the connection point of the intake manifold 14 to the cylinder head 12c and so as to deviate rightward of the vehicle width direction from the lowest end b at the bottom of the midsection 9b of the storage box 9. Therefore, the fuel injection valve 17 can be disposed with an appropriate gap between the fuel injection valve 17 and the bottom of the midsection 9b of the storage box 9 ensured, and it becomes unnecessary for the storage box 9 to be provided with a recess to prevent it from being interfered with by the fuel injection valve 17, thereby maintaining capacity of the storage box 9 and avoiding the seat height from being raised.

Also, the fuel injection valve 17 is inclined in the deviating direction relative to the vertical line c so that interference between the fuel injection valve 17 and the storage box 9 can be prevented more securely, thereby maintaining capacity of the storage box 9 and avoiding the seat height from being raised.

Furthermore, since the fuel pump 19 built into the fuel tank is disposed to a part deviating leftward of the vehicle width direction as well as forward from the lowest end a at the bottom of the forward section 9a of the storage box 9, the fuel pump can be disposed without reducing the capacity of the storage box 9. Also, the fuel tank 20 is mounted such that its rear-half section is positioned below the bottom of the forward section 9a of the storage box 9, thereby increasing the capacity of the fuel tank 20.

The fuel pump 19 is mounted to the fuel tank 20 such that the discharge opening 23d thereof is directed outward in the deviating direction, resulting in easy piping and connection of the fuel supply hose 18. Considering these points as well the fuel pump 19 can be disposed without reducing the capacity of the storage box 9 and the capacity of the fuel tank 20 can be maintained.

Also, the first and the second mounting seats 28, 28' to which the base member 27 of the fuel level detecting unit 24 is selectably and detachably mounted are formed adjacent and perpendicular to each other on the side face of the pump body 23 of the fuel pump 19, which allows the float 26 to oscillate at the two positions (the positions shown by the solid lines and the phantom lines respectively in Fig. 5) perpendicular to each other in the fuel tank 20 and allows the position where the fuel level is reliably detected based on the shape of the fuel tank or the like to be selected, thereby enabling it to handle variously shaped fuel tanks.

The base member 27 of the fuel level detecting unit 24 is also push-fitted between the left and the right rails 28a, 28a so that the engaging piece 27a of the base member 27 is engaged in each of the engaging grooves 28b formed in the mounting rails 28a to allow the fuel level detecting unit 24 to be mounted, resulting in easy mounting of the fuel level detecting unit 24.

In addition, in the above embodiment, the description in the case of the mounting seats 28 provided in two positions has been made, however, the mounting seats 28 may, of course, be provided in three or more positions. The description in the case that these mounting seats are perpendicular to each other has also been made, however, a plurality of the mounting seats may, of course, be formed adjacent to each other so as to be at angles other than 90° from each other.

## Claims

1. Combination of a fuel level detecting device and a fuel pump for fuel tanks (20) with a built-in fuel pump (19) comprising:
a fuel level detecting unit (24) for detecting an actual fuel level within said fuel tank (20), **characterized by**
a mounting structure being formed at said fuel pump (19) and having a number of mounting seats (28, 28') for an alternative attachment of said fuel level detecting unit (24).

2. Combination of a fuel level detecting device and a fuel pump according to claim 1, **characterized in that** said mounting seats (28, 28') are arranged at side faces of said fuel pump (19) thereby enclosing an angle (α) between one another.

3. Combination of a fuel level detecting device and a fuel pump according to claim 2, **characterized in that** said angle (α) enclosed between two adjacent mounting seats (28, 28') is preferably 90°.

4. Combination of a fuel level detecting device and a fuel pump according to one of the claims 1 to 3, **characterized in that** said fuel level detecting unit (24) comprises a base member (27) detachably mountable to a selected one of said mounting seats (28, 28') of said mounting structure and a floatable means (26) being connected to said base member (27).

5. Combination of a fuel level detecting device and a fuel pump according to claim 4, **characterized in that** said base member (27) comprises a sensor generating an output signal according to a position of said floatable means (26).

6. Combination of a fuel level detecting device and a fuel pump according to one of the claims 4 or 5, **characterized in that** said floatable means (26) is connected to said base member (27) via an arm (25) thereby being capable of performing an oscillating movement with respect to the base member (27).

7. Combination of a fuel level detecting device and a fuel pump according to one of the claims 4 to 6, **characterized in that** said floatable means (26) is designed to oscillate at different positions in the fuel tank (20) according to the selected mounting seat (28, 28').

8. Combination of a fuel level detecting device and a fuel pump according to one of the claims 4 to 7, **characterized in that** said floatable means (26) is designed to oscillate about a mounting position of said arm (25) at said base member (27) at positions being generally perpendicular to one another.

9. Combination of a fuel level detecting device and a fuel pump according to one of the claims 4 to 8, **characterized in that** said base member (27) is connectable by means of a push-fitting connection to a selected one of said mounting seats (28, 28'), in particular by engaging pieces (27a) formed at said base member (27) engaging in engaging grooves (28b) formed in said mounting seats (28, 28').

10. Combination of a fuel level detecting device and a fuel pump according to one of the claims 4 to 9, **characterized in that** the base member (27) of the fuel level detecting unit (24) is push-fitted between a left and a right mounting rail (28a,28a) of a selected one of the mounting seats (28, 28').

11. Combination of a fuel level detecting device and a fuel pump according to one of the claims 1 to 10, **characterized in that** the fuel level detecting unit (24) is made of metal or resin.

12. Combination of a fuel level detecting device and a fuel pump according to one of the claims 4 to 11, **characterized in that** the floatable means (26) is made as a sealed semi-cylindrical body.

13. Combination of a fuel level detecting device and a fuel pump according to one of the claims 6 to 12, **characterized in that** said arm (25) is fabricated from a rod, and a base end of said arm is oscillatory supported by said base member (27) being box-shaped.

14. Combination of a fuel level detecting device and a fuel pump according to one of the claims 1 to 13, **characterized in that** said fuel pump (19) incorporates a pump mechanism in which a filter (23c) is mounted to an inlet opening (23b) at ist lower end.

15. Motor vehicle, in particular scooter-type motorcycle, comprising a fuel tank (20) with a built-in fuel pump (19) and a fuel level detecting device according to one of the claims 1 to 14.

16. Motor vehicle according to claim 15, **characterized in that** said fuel pump (19) is placed in said fuel tank (20) in a generally vertical direction.

17. Motor vehicle according to claim 15 or 16, **characterized in that** said fuel pump (19) is mounted to the fuel tank (20) in a manner that a discharge opening (23d) thereof is directed outward in a deviating direction, for an easy piping and connection of a fuel supply hose (18).

18. Motor vehicle according to one of the claims 15 to 17, **characterized in that** the floatable means (26) is positioned within the tank (20) at a selectively higher part (22b') adjacent to a step (22c) of said tank (20) to which said fuel pump (19) is mounted to.

## Patentansprüche

1. Kombination einer Kraftstoffniveau- Erfassungsvorrichtung und einer Kraftstoffpumpe für Kraftstoffbehälter (20) mit einer eingebauten Kraftstoffpumpe, die aufweist:
eine Kraftstoffniveau- Erfassungseinheit (24) zum Erfassen eines tatsächlichen Kraftstoffniveaus innerhalb des Kraftstoffbehälters (20), **gekennzeichnet durch** einen Montageaufbau, der an der Kraftstoffpumpe (19) gebildet ist und der eine Anzahl von Montagesitzen (28, 28') für eine alternative Befestigung der Kraftstoffniveau- Erfassungseinheit (24) hat.

2. Kombination einer Kraftstoffniveau- Erfassungsvorrichtung und einer Kraftstoffpumpe nach Anspruch 1, **dadurch gekennzeichnet, dass** die Montagesitze (28, 28') an Seitenflächen der Kraftstoffpumpe (19) angeordnet sind, wodurch sie untereinander einen Winkel (α) einschließen.

3. Kombination einer Kraftstoffniveau- Erfassungsvorrichtung und einer Kraftstoffpumpe nach Anspruch 2, **dadurch gekennzeichnet, dass** der Winkel (α), eingeschlossen zwischen zwei benachbarten Montagesitzen (28, 28'), vorzugsweise 90° ist.

4. Kombination einer Kraftstoffniveau- Erfassungsvorrichtung und einer Kraftstoffpumpe nach einem der Ansprüche 1 bis 3, **dadurch gekennzeichnet, dass** die Kraftstoffniveau- Erfassungseinheit (24) ein Basisteil (27) aufweist, lösbar an einem der Montagesitze (28, 28') des Montageaufbaus montierbar, und eine schwimmfähige Einrichtung (26) mit dem Basisteil (27) verbunden ist.

5. Kombination einer Kraftstoffniveau- Erfassungsvorrichtung und einer Kraftstoffpumpe nach Anspruch 4, **dadurch gekennzeichnet, dass** das Basisteil (27) einen Sensor aufweist, der ein Ausgangssignal entsprechend einer Position der schwimmfähigen Einrichtung (26) erzeugt.

6. Kombination einer Kraftstoffniveau- Erfassungsvorrichtung und einer Kraftstoffpumpe nach einem der Ansprüche 4 oder 5, **dadurch gekennzeichnet, dass** die schwimmfähige Einrichtung (26) mit dem Basisteil (27) über einen Arm (25) verbunden ist, um dadurch in der Lage zu sein, eine Schwingbewegung in Bezug zu dem Basisteil (27) auszuführen.

7. Kombination einer Kraftstoffniveau- Erfassungsvorrichtung und einer Kraftstoffpumpe nach einem der Ansprüche 4 bis 6, **dadurch gekennzeichnet, dass** die schwimmfähige Einrichtung (26) bestimmt ist, an unterschiedlichen Positionen in dem Kraftstoffbehälter (20) entsprechend des ausgewählten Montagesitzes (28, 28') zu schwingen.

8. Kombination einer Kraftstoffniveau- Erfassungsvorrichtung und einer Kraftstoffpumpe nach einem der Ansprüche 4 bis 7, **dadurch gekennzeichnet, dass** die schwimmfähige Einrichtung (26) bestimmt ist, um eine Montageposition des Arms (25) an dem Basisteil (27) an Positionen, die im Wesentlichen zueinander rechtwinklig sind, zu schwingen.

9. Kombination einer Kraftstoffniveau- Erfassungsvorrichtung und einer Kraftstoffpumpe nach einem der Ansprüche 4 bis 8 , **dadurch gekennzeichnet, dass** das Basisteil (27) durch eine Druck- Pass- Verbindung mit einem ausgewählten der Montagesitze (28, 28') verbindbar ist, insbesondere durch Eingriffsstücke (27a), ausgebildet an dem Grundteil (27), im Eingriff in Eingriffsnuten (28b) eingreifend, die in den Montagesitzen (28, 28') gebildet sind.

10. Kombination einer Kraftstoffniveau- Erfassungsvorrichtung und einer Kraftstoffpumpe nach einem der Ansprüche 4 bis 9, **dadurch gekennzeichnet, dass** das Basisteil (27) der Kraftstoffniveau- Erfassungseinheit (24) zwischen eine linke und eine rechte Montageschiene (28a, 28a) eines ausgewählten der Montagesitze (28, 28') druck- eingesetzt ist.

11. Kombination einer Kraftstoffniveau- Erfassungsvorrichtung und einer Kraftstoffpumpe nach einem der Ansprüche 1 bis 10, **dadurch gekennzeichnet, dass** die Kraftstoffniveau- Erfassungseinheit (24) aus Metall oder Kunststoff hergestellt ist.

12. Kombination einer Kraftstoffniveau- Erfassungsvorrichtung und einer Kraftstoffpumpe nach einem der Ansprüche 4 bis 11, **dadurch gekennzeichnet, dass** die schwimmfähige Einrichtung (26) aus einem abgedichteten halb- zylindrischen Körper hergestellt ist.

13. Kombination einer Kraftstoffniveau- Erfassungsvorrichtung und einer Kraftstoffpumpe nach einem der Ansprüche 6 bis 12, **dadurch gekennzeichnet, dass** der Arm (25) aus einer Stange hergestellt ist und ein Basisende des Arms durch das Basisteil (27), das kastenförmig ist, schwingend gelagert ist.

14. Kombination einer Kraftstoffniveau- Erfassungsvorrichtung und einer Kraftstoffpumpe nach einem der Ansprüche 1 bis 13, **dadurch gekennzeichnet, dass** die Kraftstoffpumpe (19) eine Pumpenvorrichtung einschließt, in die ein Filter (23c) an einer Einlassöffnung (23b) an ihrem unteren Ende montiert ist.

15. Kraftfahrzeug, insbesondere ein Motorrad der Rollerart, das einen Kraftstoffbehälter (20) mit einer eingebauten Kraftstoffpumpe (19) und eine Kraftstoffniveau-Erfassungsvorrichtung nach einem der Ansprüche 1 bis 14 aufweist.

16. Kraftfahrzeug nach Anspruch 15, **dadurch gekennzeichnet, dass** die Kraftstoffpumpe (19) in dem Kraftstoffbehälter (20) in einer im Wesentlichen vertikalen Richtung eingesetzt ist.

17. Kraftfahrzeug nach Anspruch 15 oder 16, **dadurch gekennzeichnet, dass** die Kraftstoffpumpe (19) in dem Kraftstoffbehälter (20) in einer derartigen Weise montiert ist, dass eine Auslassöffnung (23d) derselben auswärts in eine Abgehrichtung zur Erleichterung des Verrohrens und der Verbindung eines Kraftstoffzuführungsschlauchstücks (18) gerichtet ist.

18. Kraftfahrzeug nach einem der Ansprüche 15 bis 17, **dadurch gekennzeichnet, dass** die schwimmfähige Einrichtung (26) innerhalb des Behälters (20) an einem wahlweise höheren Teil (22b'), benachbart zu einer Stufe (22c) des Behälters (20), an der die Kraftstoffpumpe (19) montiert ist, positioniert ist.

## Revendications

1. Combinaison d'un dispositif de détection de niveau de carburant et d'une pompe à carburant pour réservoirs de carburant (20) comportant une pompe à carburant incorporée (19), comprenant :
un ensemble de détection de niveau de carburant (24) destiné à détecter un niveau réel de carburant à l'intérieur dudit réservoir de carburant (20), **caractérisée par**,
une structure de montage étant formée sur ladite pompe à carburant (19) et qui comporte un certain nombre de sièges de montage (28, 28') destinés à une autre fixation dudit ensemble de détection de niveau de carburant (24).

2. Combinaison d'un dispositif de détection de niveau de carburant et d'une pompe à carburant selon la revendication 1, **caractérisée en ce que** lesdits sièges de montage (28, 28') sont aménagés sur des faces latérales de ladite pompe à carburant (19) et sont ainsi disposés les uns par rapport aux autres selon un angle (α).

3. Combinaison d'un dispositif de détection de niveau de carburant et d'une pompe à carburant selon la revendication 2, **caractérisée en ce que** ledit angle (α) aménagé entre deux sièges de montage adjacents (28, 28') est de préférence égal à 90°.

4. Combinaison d'un dispositif de détection de niveau de carburant et d'une pompe à carburant selon l'une des revendications 1 à 3, **caractérisée en ce que** ledit ensemble de détection de niveau de carburant (24) se compose d'un élément de base (27) pouvant être monté de manière amovible sur un siège sélectionné desdits sièges de montage (28, 28') de ladite structure de montage et de moyens flottants (26) qui sont connectés audit élément de base (27).

5. Combinaison d'un dispositif de détection de niveau de carburant et d'une pompe à carburant selon la revendication 4, **caractérisée en ce que** ledit élément de base (27) comprend un capteur qui génère un signal de sortie en fonction d'une position desdits moyens flottants (26).

6. Combinaison d'un dispositif de détection de niveau de carburant et d'une pompe à carburant selon l'une des revendications 4 ou 5, **caractérisée en ce que** lesdits moyens flottants (26) sont connectés audit élément de base (27) par l'intermédiaire d'un bras (25), ce qui les rend capables d'effectuer un mouvement oscillant par rapport à l'élément de base (27).

7. Combinaison d'un dispositif de détection de niveau de carburant et d'une pompe à carburant selon l'une des revendications 4 à 6, **caractérisée en ce que** lesdits moyens flottants (26) sont conçus de manière à osciller sur différentes positions dans le réservoir de carburant (20) en fonction du siège de montage sélectionné (28, 28').

8. Combinaison d'un dispositif de détection de niveau de carburant et d'une pompe à carburant selon l'une des revendications 4 à 7, **caractérisée en ce que** les moyens flottants (26) sont conçus de manière à osciller autour d'une position de montage dudit bras (25) sur ledit élément de base (27) dans des positions qui sont généralement perpendiculaires les unes par rapport aux autres.

9. Combinaison d'un dispositif de détection de niveau de carburant et d'une pompe à carburant selon l'une des revendications 4 à 8, **caractérisée en ce que** ledit élément de base (27) peut être connecté au moyen d'une connexion à frottement doux à un siège sélectionné desdits sièges de montage (28, 28'), en particulier par des pièces d'engagement (27a) formées sur ledit élément de base (27) qui s'engagent dans des gorges d'engagement (28b) formées dans lesdits sièges de montage (28, 28').

10. Combinaison d'un dispositif de détection de niveau de carburant et d'une pompe à carburant selon l'une des revendications 4 à 9, **caractérisée en ce que** l'élément de base (27) de l'ensemble de détection de niveau de carburant (24) est monté en frottement doux entre un rail de montage gauche et un rail de montage droit (28a, 28a) d'un siège sélectionné desdits sièges de montage (28, 28').

11. Combinaison d'un dispositif de détection de niveau de carburant et d'une pompe à carburant selon l'une des revendications 1 à 10, **caractérisée en ce que** l'ensemble de détection de niveau de carburant (24) est fabriqué dans un métal ou dans une résine.

12. Combinaison d'un dispositif de détection de niveau de carburant et d'une pompe à carburant selon l'une des revendications 4 à 11, **caractérisée en ce que** les moyens flottants (26) sont construits sous forme de corps semi-cylindrique hermétique.

13. Combinaison d'un dispositif de détection de niveau de carburant et d'une pompe à carburant selon l'une des revendications 6 à 12, **caractérisée en ce que** ledit bras (25) est fabriqué à partir d'une tige, et **en ce qu'**une extrémité d'embase dudit bras est supportée en oscillation par ledit élément de base (27) qui a une forme de boîtier.

14. Combinaison d'un dispositif de détection de niveau de carburant et d'une pompe à carburant selon l'une des revendications 1 à 13, **caractérisée en ce que** ladite pompe à carburant (19) comprend un mécanisme de pompe dans lequel est monté un filtre (23c) sur une ouverture d'admission (23b) située à son extrémité inférieure.

15. véhicule à moteur, en particulier motocycle de type scooter, comprenant un réservoir de carburant (20) comportant une pompe à carburant incorporée (19) et un dispositif de détection de niveau de carburant selon l'une des revendications 1 à 14.

16. véhicule à moteur selon la revendication 15, **caractérisé en ce que** ladite pompe à carburant (19) est placée dans ledit réservoir de carburant (20) dans une direction généralement verticale.

17. Véhicule à moteur selon la revendication 15 ou la revendication 16, **caractérisé en ce que** ladite pompe à carburant (19) est montée sur le réservoir de carburant (20) de telle sorte que l'ouverture d'évacuation (23d) de celui-ci est dirigée vers l'extérieur dans une direction en déviation, afin de faciliter la connexion et le tuyautage d'un tuyau flexible d'alimentation en carburant (18).

18. Véhicule à moteur selon l'une des revendications 15 à 17, **caractérisé en ce que** les moyens flottants (26) sont positionnés à l'intérieur du réservoir (20) dans une partie sélectivement plus élevée (22') située à proximité d'un palier (22c) dudit réservoir (20) sur lequel est montée ladite pompe à carburant (19).
